# FASCICULE DE BREVET EUROPEEN

(11) **EP 0 470 904 B1**
(45) Date de publication et mention de la délivrance du brevet: **16.02.1994**
(21) Numéro de dépôt: 91402192.8
(22) Date de dépôt: 06.08.1991
(51) Int. Cl.: B60H 1/24

(54) **Installation de chauffage pour véhicule automobile avec circuits d'air séparés gauche et droit**
Kraftfahrzeugheizanlage mit getrennter Anordnung von linken und rechten Luftleitungen
Heating device for automobile vehicle with separated left and right air circuits

(30) Priorité: 08.08.1990 FR 9010147
(43) Date de publication de la demande: 12.02.1992
(73) Titulaire: VALEO THERMIQUE HABITACLE, 78320 Le Mesnil-Saint-Denis (FR)
(72) Inventeur: Auvity, Michel, F-78320 Velizy (FR)
(74) Mandataire: Gamonal, Didier

(56) Documents cités:
- EP-A- 0 377 746
- DE-C- 3 541 284
- DE-U- 1 934 891

## Description

L'invention concerne les installations d'aération et/ou de chauffage, ou de climatisation, pour véhicule automobile.

Pour donner satisfaction aux occupants qui souhaitent des températures différentes, il est prévu dans certains véhicules de telles installations comprenant des moyens définissant des circuits séparés gauche et droit pour le traitement de l'air à envoyer dans les moitiés gauche et droite de l'habitacle du véhicule. Une telle installation permet de régler indépendamment entre autres la température régnant dans la moitié gauche et dans la moitié droite du véhicule.

Si les circuits séparés s'étendaient jusqu'aux buses prévues pour le dégivrage ou le désembuage du pare-brise, la différence de température entre l'air envoyé des deux côtés du pare-brise pourrait entraîner, dans certaines circonstances, un dégivrage ou un désembuage insuffisant, ou même un embuage ou un givrage, de l'une des moitiés. Une telle installation est connue par exemple de DE-U-1 934 891.

Le but de l'invention est d'utiliser l'air traité dans les deux circuits séparés pour le dégivrage et/ou le désembuage du pare-brise, en évitant cet inconvénient.

A cet effet, l'invention vise une installation d'aération et/ou de chauffage, ou de climatisation, pour véhicule automobile, comprenant des moyens définissant des circuits séparés gauche et droit pour le traitement de l'air à envoyer dans les moitiés gauche et droite de l'habitacle du véhicule, et au moins une buse de dégivrage et/ou de désembuage pour diriger de l'air traité vers le pare-brise du véhicule, caractérisée en ce qu'elle comprend en outre des moyens définissant quatre trajets pour l'air entre des ouvertures de sortie des circuits gauche et droit et la buse, à savoir un premier trajet allant d'une ouverture de sortie du circuit gauche à une région de la buse située dans la moitié gauche du véhicule, un second trajet allant de cette même ouverture de sortie à une région de la buse située dans la moitié droite du véhicule, un troisième trajet allant d'une ouverture de sortie du circuit droit à une région de la buse située dans la moitié gauche du véhicule et un quatrième trajet allant de cette dernière ouverture de sortie à une région de la buse située dans la moitié droite du véhicule.

Grâce à l'invention, l'air sortant par la buse est à une température homogène aussi bien dans la moitié gauche que la moitié droite de l'habitacle.

L'installation selon l'invention peut comprendre deux buses de dégivrage et/ou de désembuage situées respectivement dans la moitié gauche et dans la moitié droite du véhicule et auxquelles appartiennent respectivement les régions situées dans la moitié gauche et les régions situées dans la moitié droite.

Selon un mode de réalisation de l'invention, les moyens définissant les quatre trajets comprennent une pièce moulée formant des parois minces adjacentes chacune à deux desdits trajets.

Cette pièce moulée peut définir les quatre trajets jusques et y compris à la ou aux buses de dégivrage.

Avantageusement, la pièce moulée comporte quatre ouvertures d'entrée, mutuellement alignées dans la direction transversale, pour les premier, second, troisième et quatrième trajets, se raccordant aux ouvertures de sortie des circuits gauche et droit et séparées les unes des autres par lesdites parois minces.

Dans une configuration préférée de l'installation, les second et troisième trajets s'étendent d'abord, à partir des ouvertures d'entrée correspondantes, en direction de la buse, en se rétrécissant en sens opposés dans la direction longitudinale du véhicule, puis se croisent en se dirigeant respectivement vers la droite et vers la gauche, l'un d'eux passant en avant et l'autre en arrière d'une paroi de séparation orientée transversalement, pour venir se raccorder respectivement aux quatrième et premier trajets.

D'autres caractéristiques et avantages de l'invention ressortiront de la description détaillée ci-après, et des dessins annexés dans lesquels:
la Figure 1 représente schématiquement la configuration de principe des quatre trajets d'air d'une installation selon l'invention;
la Figure 2 est une vue en élévation d'une pièce moulée définissant ces quatre trajets;
les Figures 3A à 3E sont des sections prises selon les lignes A-A, B-B, C-C, D-D et E-E de la Figure 2;
la Figure 3F est une vue en coupe selon la ligne F-F de la Figure 2; et
les Figures 3G et 3H sont des sections prises selon les lignes G-G et H-H de la Figure 2.

L'installation comportant les quatre trajets illustrés dans les Figures comprend des moyens, connus en eux-mêmes et non représentés, pour définir des circuits séparés gauche et droit pour le traitement de l'air, ces moyens pouvant comprendre notamment un boîtier enfermant un ou des pulseurs d'air, un ou des échangeurs de chaleur pour le chauffage et/ou le refroidissement de l'air, des volets pivotants, ainsi que des organes de commande.

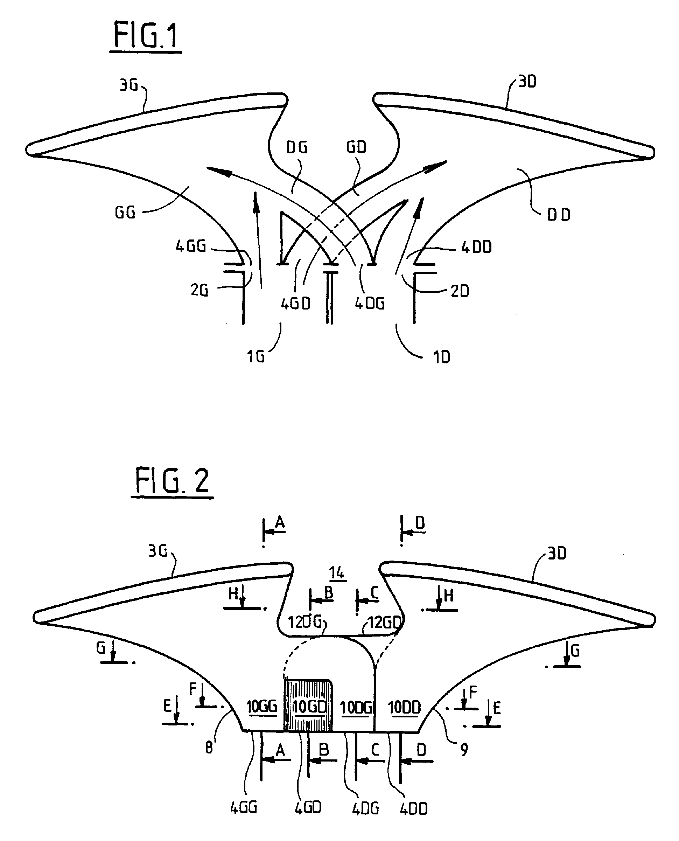

Les circuits séparés comportent respectivement deux tubulures de sortie 1G et 1D, terminées par des ouvertures de sortie 2G et 2D, pour de l'air traité destiné à être envoyé dans deux buses 3G et 3D de dégivrage et/ou de désembuage du pare-brise, situées respectivement dans les moitiés gauche et droite du véhicule. Comme illustré schématiquement à la Figure 1, l'installation comprend quatre canalisations définissant des trajets d'air respectifs GG, GD, DG et DD entre les ouvertures 2G et 2D et les buses 3G et 3D. Plus particulièrement, les trajets GG et GD comportent des ouvertures d'entrée respectives 4GG et 4GD qui sont juxtaposées pour venir en coïncidence avec l'ouverture 2G, et les trajets DG et DD comportent des ouverture: d'entrée respectives 4DG et 4DD qui sont juxtaposées pour venir en coïncidence avec l'ouverture 2D. Les trajets GG et DG débouchent en aval par la buse 3G, et les trajets GD et DD par la buse 3D.

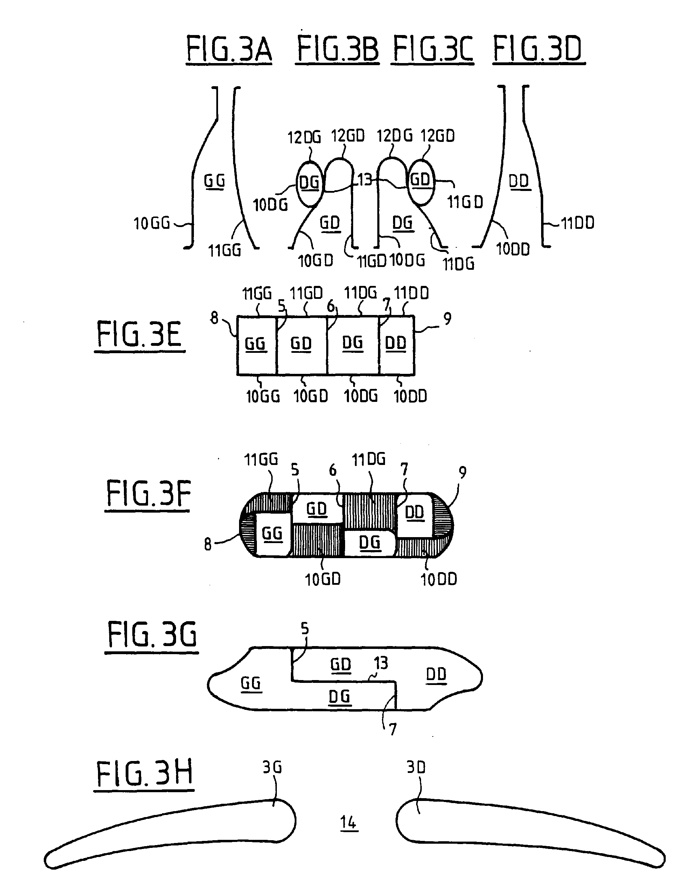

Les Figures 2 et 3A à 3H montrent la réalisation pratique des quatre trajets et des deux buses par une pièce moulée monobloc.

Comme on le voit aux Figures 2 et 3E, les ouvertures d'entrée 4GG, 4GD, 4DG et 4DD, et les trajets GG, GD, DG et DD au voisinage immédiat de celles -ci, sont alignés dans cet ordre dans la direction transversale (de gauche à droite des Figures ), et sont séparés les uns des autres par des parois minces 5, 6 et 7, les trajets GG et DD étant limités à droite et à gauche par des parois extérieures 8 et 9 de la pièce moulée. Sur la face arrière de la pièce moulée, tournée vers l'intérieur du véhicule et visible à la Figure 2, les trajets GG, GD, DG et DD sont limités respectivement par des portions de paroi extérieure 10GG, 10GD, 10DG et 10DD. En s'éloignant du plan des ouvertures d'entrée, comme l'indiquent les figures 3A à 3D et 3F, les parois 5, 6, 7, 10GG et 10DG s'élèvent sensiblement verticalement, c'est-à-dire parallèlement à la direction moyenne de l'écoulement de l'air dans l'ensemble des quatre trajets, tandis que les parois 8, 9, 10GD et 10DD sont inclinées par rapport à cette direction. Plus particulièrement, les parois 8 et 9 s'évasent vers la gauche et vers la droite respectivement, pour réaliser un étalement du courant d'air sur la largeur des buses 3G et 3D. De même, la paroi 10DD est inclinée vers l'intérieur de la pièce moulée pour réaliser un amincissement progressif du trajet DD dans la direction longitudinale du véhicule, vers la buse 3D. La paroi 10GD est également inclinée vers l'intérieur, c'est-à-dire vers l'avant du véhicule, de façon à dégager, en arrière du trajet GD, un espace libre permettant le passage à l'horizontale du trajet DG au niveau du plan de coupe G-G.A ce niveau, comme le montre la figure 3G, les parois 6 et 7 sont interrompues dans la moitié arrière et permettent au trajet GD de se joindre au trajet DD.

Sur la face avant de la pièce moulée, les trajets GG, GD, DG et DD sont limités respectivement par des éléments de paroi 11GG, 11GD, 11DG et 11DD. Les éléments 11GD et 11DD s'élèvent sensiblement verticalement, comme les éléments 10GG et 10DG, tandis que les éléments 11GG et 11DG sont inclinés vers l'intérieur comme les éléments 10GD et 10DD. De même, le trajet GD est recourbé à l'horizontale, au niveau du plan de coupe G-G,en avant du trajet DG et au-dessus de la portion de paroi inclinée 11DG et vient rejoindre le trajet GG grâce à une interruption des parois 6 et 5. Les éléments de paroi 10GD et 11DG se prolongent vers le haut par un élément de paroi transversal 13 séparant les portions horizontales des trajets DG et GD, lesquelles portions horizontales sont limitées vers le haut par des éléments de paroi 12DG et 12GD qui relient respectivement l'élément de paroi 13 aux éléments de paroi 10DG et 11GD. Au-dessus des éléments de paroi 12DG et 12GD se trouve un espace libre 14, extérieur à la pièce moulée, qui sépare les buses 3G et 3D, (Figures 2 et 3H). A ce niveau, les éléments de paroi 10GG et 10DD sont inclinés à leur tour vers l'intérieur pour permettre à l'espace interne de la pièce moulée de s'amincir progressivement à l'épaisseur des buses dans la direction longitudinale du véhicule.

## Revendications

1. Installation d'aération et/ou de chauffage, ou de climatisation, pour véhicule automobile, comprenant des moyens définissant des circuits séparés gauche (1G) et droit (1D) pour le traitement de l'air à envoyer dans les moitiés gauche et droite de l'habitacle du véhicule, et au moins une buse (3G, 3D) de dégivrage et/ou de désembuage pour diriger de l'air traité vers le pare-brise du véhicule, caractérisée en ce qu'elle comprend en outre des moyens définissant quatre trajets pour l'air entre des ouvertures de sortie des circuits gauche et droit et la buse, à savoir un premier trajet (GG) allant d'une ouverture de sortie (2G) du circuit gauche à une région (3G) de la buse située dans la moitié gauche du véhicule, un second trajet (GD) allant de cette même ouverture de sortie à une région (3D) de la buse située dans la moitié droite du véhicule, un troisième trajet (DG) allant d'une ouverture de sortie (2D) du circuit droit à une région (3G) de la buse située dans la moitié gauche du véhicule, et un quatrième trajet (DD) allant de cette dernière ouverture de sortie à une région (3D) de la buse située dans la moitié droite du véhicule.

2. Installation selon la revendication 1, caractérisée en ce qu'elle comprend deux buses (3G, 3D) de dégivrage et/ou de désembuage situées respectivement dans la moitié gauche et dans la moitié droite du véhicule et auxquelles appartiennent respectivement les régions situées dans la moitié gauche et les régions situées dans la moitié droite.

3. Installation selon l'une des revendications 1 et 2, caractérisée en ce que lesdits moyens définissant les quatre trajets comprennent une pièce moulée formant des parois minces (5, 6, 7, 13) adjacentes chacune à deux desdits trajets.

4. Installation selon la revendication 3, caractérisée en ce que ladite pièce moulée définit les quatre trajets jusques et y compris à la ou aux buses de dégivrage.

5. Installation selon l'une des revendications 3 et 4, caractérisée en ce que la pièce moulée comporte quatre ouvertures d'entrée (4GG, 4GD, 4DG, 4DD) alignées mutuellement dans la direction transversale, pour les premier, second, troisième et quatrième trajets, se raccordant aux ouvertures de sortie (2G, 2D) des circuits gauche et droit et séparées les unes des autres par lesdites parois minces (5, 6, 7).

6. Installation selon la revendication 5, caractérisée en ce que les second (GD) et troisième (DG) trajets s'étendent d'abord, à partir des ouvertures d'entrée correspondantes, en direction de la buse, en se rétrécissant en sens opposés dans la direction longitudinale du véhicule, puis se croisant en se dirigeant respectivement vers la droite et vers la gauche, l'un d'eux passant en avant et l'autre en arrière d'une paroi de séparation (13) orientée transversalement, pour venir se raccorder respectivement aux quatrième (DD) et premier (GG) trajets.

## Patentansprüche

1. Belüftungs- bzw. Heiz- oder Klimaanlage für ein Kraftfahrzeug, enthaltend Mittel zur Definition des linken (1G) und rechten (1D) Kreislaufs für die Aufbereitung der in die linke und die rechte Hälfte der Fahrzeugkabine einzuleitenden Luft und wenigstens eine Entfrostungs- bzw. Beschlagbeseitigungsdüse (3G, 3D), um behandelte Luft zur Windschutzscheibe des Fahrzeugs zu leiten, **dadurch gekennzeichnet,** daß sie außerdem Mittel zur Definition von vier Strecken für die Luft zwischen Austrittsöffnungen des linken und des rechten Kreislaufs und der Düse enthält, nämlich für eine erste Strecke (GG), die von einer Austrittsöffnung (2G) des linken Kreislaufs in einen Bereich (3G) der in der linken Hälfte des Fahrzeugs angeordneten Düse verläuft, eine zweite Strecke (GD), die von der gleichen Austrittsöffnung in einen Bereich (3D) der in der rechten Hälfte des Fahrzeugs angeordneten Düse verläuft, eine dritte Strecke (DG), die von einer Austrittsöffnung (2D) des rechten Kreislaufs in einen Bereich (3G) der in der linken Hälfte des Fahrzeugs angeordneten Düse verläuft, und eine vierte Strecke (DD), die von dieser letzten Austrittsöffnung in einen Bereich (3D) der in der rechten Hälfte des Fahrzeugs angeordneten Düse verläuft.

2. Anlage nach Anspruch 1, **dadurch gekennzeichnet,** daß sie zwei Entfrostungs- bzw. Beschlagbeseitigungsdüsen (3G, 3D) enthält, die sich in der linken bzw. der rechten Hälfte des Fahrzeugs befinden und zu denen jeweils Bereiche gehören, die in der linken Hälfte bzw. in der rechten Hälfte liegen.

3. Anlage nach einem der Ansprüche 1 und 2, **dadurch gekennzeichnet,** daß die genannten, die vier Strecken definierenden Mittel ein Preßteil enthalten, welches dünne Wände (5, 6, 7, 13) bildet, die jeweils an zwei der genannten Strecken angrenzen.

4. Anlage nach Anspruch 3, **dadurch gekennzeichnet,** daß das genannte Preßteil die vier Strecken bis einschließlich der Entfrostungsdüse(n) definiert.

5. Anlage nach einem der Ansprüche 3 und 4, **dadurch gekennzeichnet,**daß das Preßteil vier Eintrittsöffnungen (4GG, 4GD, 4DG, 4DD) enthält, die gegenseitig in Querrichtung für die erste, zweite, dritte und vierte Strecke ausgerichtet sind und mit den Austrittsöffnungen (2G, 2D) des linken und rechten Kreislaufs verbunden und voneinander durch die genannten dünnen Wände (5, 6, 7) getrennt sind.

6. Anlage nach Anspruch 5, **dadurch gekennzeichnet,** daß die zweite (GD) und dritte (DG) Strecke sich, ausgehend von den entsprechenden Eintrittsöffnungen, zunächst in Richtung der Düse erstrecken und sich in entgegengesetzten Richtungen in der Längsrichtung des Fahrzeugs verjüngen, sich dann kreuzen und sich nach rechts bzw. nach links wenden, wobei eine derselben vor und die andere hinter einer in Querrichtung verlaufenden Trennwand (13) verläuft, um an die vierte (DD) und erste (GG) Strecke anzuschließen.

## Claims

1. An installation for ventilating and/or heating, or air conditioning, for a motor vehicle, comprising means defining separate left hand (1G) and right hand (1D) circuits for the treatment of air to be delivered into the left and right hand halves of the cabin of the vehicle, and at least one de-icing and/or demisting port (3G, 3D) for directing processed air towards the windscreen of the vehicle, characterised in that it further includes means defining four flow paths for the air between the outlet apertures of the left and right hand circuits and the port, namely a first flow path (GG) going from an outlet aperture (2G) of the left hand circuit to a region (3G) of the port which is situated in the left hand half of the vehicle, a second flow path (GD) going from this same outlet aperture to a region (3D) of the port which is situated in the right hand half of the vehicle, a third flow path (DG) going from an outlet aperture (2D) of the right hand circuit to a region (3G) of the port which is situated in the left hand half of the vehicle, and a fourth flow path (DD) going from this last mentioned outlet aperture to a region (3D) of the port which is situated in the right hand half of the vehicle.

2. An installation according to Claim 1, characterised in that it has two deicing and/or demisting ports (3G, 3D) which are situated respectively in the left hand half and the right hand half of the vehicle, and of which the regions situated in the left hand half and the regions situated in the right hand half are respectively a part.

3. An installation according to Claim 1 or Claim 2, characterised in that the said means defining the four flow paths comprise a moulded member defining thin walls (5, 6, 7, 13), each of which is adjacent to two of the said flow paths.

4. An installation according to Claim 3, characterised in that the said moulded member defines the four flow paths up to and including the deicing port or ports.

5. An installation according to Claim 3 or Claim 4, characterised in that the moulded member has four inlet apertures (4GG, 4GD, 4DG, 4DD) which are mutually aligned in the transverse direction, for the first, second, third and fourth flow paths, are connected to the outlet apertures (2G, 2D) of the left and right hand circuits, and are separated from each other by the said thin walls (5, 6, 7).

6. An installation according to Claim 5, characterised in that the second (GD) and third (DG) flow paths extend firstly, from the corresponding inlet apertures towards the port, becoming narrower in opposite directions in the longitudinal direction of the vehicle, then becoming wider while being directed respectively towards the right and towards the left, with one of them passing in front of, and the other behind, a separating wall (13) which is orientated transversely, so as to be merged respectively with the fourth (DD) and first (DG) flow paths respectively.
